# EUROPÄISCHE PATENTSCHRIFT

(11) **EP 1 512 042 B1**
(45) Veröffentlichungstag und Bekanntmachung des Hinweises auf die Patenterteilung: **20.12.2006**
(21) Anmeldenummer: 03735300.0
(22) Anmeldetag: 13.05.2003
(51) Int. Cl.: G02F 1/035, H04B 10/22

(54) **VORRICHTUNG ZUR OPTISCHEN SIGNALÜBERTRAGUNG ZWISCHEN ZWEI GEGENEINANDER BEWEGLICHEN EINHEITEN**
DEVICE FOR OPTICAL SIGNAL TRANSMISSION BETWEEN TWO UNITS THAT ARE DISPLACED IN RELATION TO ONE ANOTHER
DISPOSITIF DE TRANSMISSION OPTIQUE DE SIGNAUX ENTRE DEUX UNITES QUI SONT DEPLACEES L'UNE PAR RAPPORT A L'AUTRE

(30) Priorität: 28.05.2002 DE 10223834; 28.08.2002 DE 10240228
(43) Veröffentlichungstag der Anmeldung: 09.03.2005
(73) Patentinhaber: Schleifring und Apparatebau GmbH, 82256 Fürstenfeldbruck (DE)
(72) Erfinder: SCHILLING, Harry, 85072 Eichstätt (DE)
(74) Vertreter: Lohr, Georg
(86) Internationale Anmeldenummer: PCT/DE2003/001536
(87) Internationale Veröffentlichungsnummer: WO 2003/102677

(56) Entgegenhaltungen:
- EP-A- 0 819 969
- US-A- 5 303 079
- US-B1- 6 278 815

## Beschreibung

### Technisches Gebiet

Die Erfindung betrifft eine Vorrichtung zur Übertragung von Informationen mittels Lichtleitern, wobei Sender und/oder Empfänger entlang eines Lichtleiters bewegt oder unterschiedlich positioniert werden können.

Derartige Vorrichtungen werden beispielsweise in einer linearen Ausführung in Krananlagen oder anderen Fördersystemen zur Datenübertragung zwischen dem beweglichen Kran und einer stationären Steuereinheit eingesetzt. Ein anderes Anwendungsgebiet dieser Datenübertragungssysteme in einer kreisförmigen Ausführung ist die Übertragung zwischen gegeneinander drehbaren Teilen wie beispielsweise in einem Computertomografen zwischen dem Rotor, welcher die Röntgenröhre sowie den Detektor trägt, und einer stationären Auswerteeinheit, welche die Bilddaten verarbeitet und anzeigt. Auch im stationären Einsatz, beispielsweise bei optischen Leiterplatten werden verschiedene Abgriffe entlang einer vorgegebenen Strecke benötigt. Diese Abgriffe können wahlweise permanent vorgesehen sein oder beispielsweise durch Steckbare Module entsprechend dem aktuellen Bedarf besetzt werden.

### Stand der Technik

Bei dem Stand der Technik entsprechenden, auf Lichtleitern basierenden Übertragungssystemen wird an einem Ende des Lichtleiters Licht eingekoppelt, welches dann durch den Lichtleiter bis zu dessen anderem Ende geführt wird und dort durch einen entsprechenden Empfänger wieder ausgewertet wird. Darauf basierend ist eine Vielzahl unterschiedlicher Varianten bekannt, welche die gleichzeitige Übertragung mehrerer Wellenlängen mittels Filtern oder auch die Übertragung zu mehreren verschiedenen Orten beispielsweise mittels Y-Kopplern ermöglichen. Derartige Systeme sind allerdings nicht geeignet, um Signale an beliebigen Positionen einer lichtleitenden Faser seitlich ein- bzw. auszukoppeln. Hierfür sind verschiedene andere Technologien bekannt.

Eine solche Vorrichtung ist in der US-Patentschrift 5,297,225 beschrieben. Hier wird durch von außen angebrachte Kerben in dem lichtleitenden Medium von außen eingekoppeltes Licht durch Reflexion in solchen Winkeln abgelenkt, dass es in dem Medium geführt werden kann. Eine solche Übertragungsvorrichtung ist sinnvoll einsetzbar, wenn eine Einkopplung an fest vorgegebenen Positionen erfolgen soll. Grundsätzlich ist es auch für die Übertragung zwischen beweglichen Einheiten einsetzbar, da die Licht ein- bzw. Auskopplung berührungslos erfolgt. Wird allerdings eine größere Bewegungsstrecke gefordert, wie dies bei Krananlagen oder auch Drehübertragungssystemen großer Durchmesser der Fall ist, so ergibt sich durch die vielen Kerben entlang des lichtleitenden Mediums eine sehr hohe Dämpfung. Dadurch werden an die Dynamik des Empfängers extreme Anforderungen gestellt. Eine typische Dämpfung diese Anordnung von ca. 10 dB pro Meter überfordert bei einer Streckelänge von einigen Metern herkömmliche optische Empfänger. Somit ist dieses Übertragungssystem bei längeren Übertragungsstrecken nur mit besonders teuren und aufwändigen optischen Komponenten realisierbar.

Alternativ ist zur Übertragung beispielsweise auch ein Lichtleiter, welcher im wesentlichen durch einen Graben mit verspiegelter Oberfläche gebildet wird, geeignet. Ein solcher Lichtleiter ist in der US-Patentschrift 4,525,025 offenbart.

Die verschiedenen Prinzipien der Lichtein- bzw. Auskopplung sind in ihrer Bandbreite begrenzt und daher für Datenraten im GBaud-Bereich kaum mehr einsetzbar. Werden breitbandige Lichtleiter, wie beispielsweise Singlemode-Fasern eingesetzt, so muss das einzukoppelnde Licht extrem genau, d. h. im Mikrometer-Bereich, positioniert werden. Dies ist bei gegeneinander schnell beweglichen Systemen, wie in Computertomografen, welche sich derzeit mit einer Umfangsgeschwindigkeit von bis zu 20 m/s bewegen, technisch kaum realisierbar. Auch bei langsam beweglichen Systemen ist eine Positionierung, welche die üblichen Anforderungen an Stoßfestigkeit und Vibrationsfestigkeit, wie sie an industrielle und militärische Geräte gestellt werden, erfüllt, nur mit extremen mechanischen Aufwand realisierbar.

Versucht man, im Falle der Lichteinkopplung in den Lichtleiter diesen mit einem großen Strahlquerschnitt zu beleuchten, so benötigt man hierfür sehr hohe Sendeleistungen. Derartige leistungsstarke Bauelemente, wie Laser, sind aber meist entsprechend langsam modulierbar. Werden im Falle der Strahlauskopplung großflächige Empfangsdioden eingesetzt, so ist auch hier auf Grund deren vergrößerter Fläche eine wesentlich geringere Datenrate erzielbar.

In der DE 196 25 870 A1 ist ein weiteres optisches Übertragungssystem beschrieben, in welches das zu empfangende optische Signal seitlich durch Streuung eingekoppelt werden kann. Um hier überhaupt ein auswertbares Signal zu erhalten, ist der Lichtleiter als optischer Verstärker ausgebildet. Er besteht aus einem Material, dessen Elektronenanordnung durch energetische Anregung invertierbar ist und das durch stimulierte Emission Licht abstrahlt. Die Stimulation erfolgt hierbei durch das durch Streuung eingekoppelte Licht. Diese Vorrichtung erfordert einen besonders hohen technischen Aufwand. So ist mindestens eine Pumplichtquelle, meist ein Laser höherer Leistung sowie Wellenlängenselektive Koppelelemente zur Einkopplung des Pumplichtes sowie zur Trennung von Pumplichtes und emittiertem Licht notwendig. Diese zusätzlichen Komponenten erhöhen die Systemkosten eines derartigen Übertragungssystems derart, dass es auf breiter Basis in industriellen und medizinischen Anwendungen nicht einsetzbar ist.

Die dem Stand der Technik entsprechenden Vorrichtungen erfordern auf Grund des niedrigen einkoppelwirkungsgrades eine äußerst präzise Fokussierung des eingekoppelten Lichtes und stellen damit an die mechanische Ausführung der gesamten Anordnung sehr hohe Anforderungen. Neben den mechanischen Problemen sind die bekannten optischen Lösungen besonders empfindlich gegenüber Verschmutzung der optischen Systeme. Wird beispielsweise der Lichtleiter im Laufe der Zeit von einer Schicht aus Kohlestaub, beispielsweise von benachbarten Schleifkohlen zur elektrischen Signalübertragung, sowie Öl und anderen Verunreinigungen bedeckt, so steigt die Dämpfung des Übertragungssystems stark an.

Da die technischen Funktionsprinzipien zur Drehübertragung sowie zur linearen bzw. kurvenförmigen Übertragung dieselben sind, wird in den folgenden Ausführungen nicht weiter zwischen diesen unterschieden. Die Begriffe werden synonym verwendet. Weiterhin wird auch nicht zwischen den Begriffen Lichtwellenleiter und Lichtleiter unterschieden, da zwar bevorzugt Lichtwellenleiter in der technischen Realisierung eingesetzt werden, aber deren Funktionen in Bezug auf die Erfindung vergleichbar sind.

In der US 5,303,079 ist ein Lichtmodulator offenbart, der von zwei elektrischen Signalen gesteuert wird. Hierbei sind die Steuerelektroden fest mit dem Lichtleiter auf einem gemeinsamen Träger integriert.

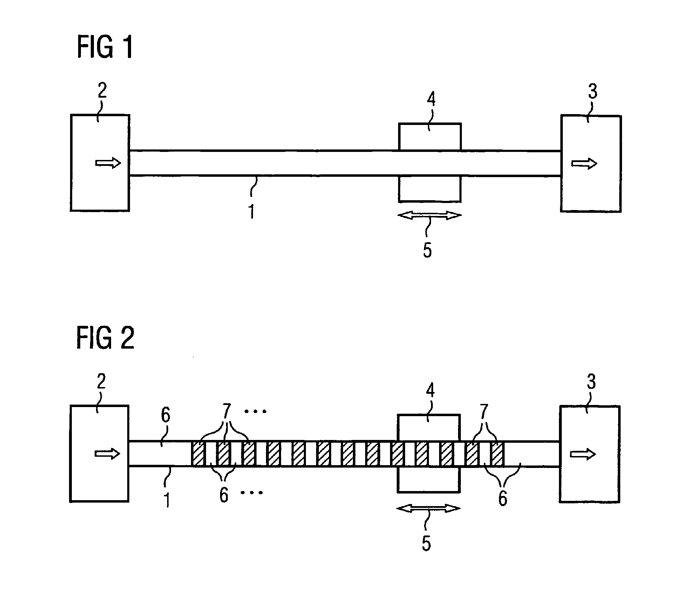

Die EP 0 819 962 A2 offenbart ein Verfahren zur Fertigung eines Modulators für optische Signale. Wie beispielsweise darin in Figur 2 sowie der zugehörigen Beschreibung offenbart, sind die Steuerelektroden sowie der modulierende Lichtleiterbereich fest, d.h. stationär miteinander verbunden.

In der US 6,278,815 ist eine Vorrichtung zur Übertragung von optischen Signalen zwischen zwei gegeneinander beweglichen Einheiten offenbart. So projiziert darin eine erste Lichtquelle ein optisches Gitter auf die Oberfläche des Lichtleiters. Durch dieses Gitter ist es nun möglich, moduliertes Licht unmittelbar in den Lichtleiter selbst von außerhalb einzukoppeln.

### Darstellung der Erfindung

Der Erfindung liegt die Aufgabe zugrunde, ein breitbandiges optisches Datenübertragungssystem bereitzustellen, das die zuvor genannten Nachteile nicht aufweist und insbesondere kostengünstiger realisierbar sowie unempfindlich gegenüber mechanischen Toleranzen ist. Weiterhin soll das Übertragungssystem weitgehend unempfindlich gegen Verschmutzungen des Lichtleiters sein.

Eine erfindungsgemäße Lösung dieser Aufgabe ist im Patentanspruch 1 angegeben. Weiterbildungen der Erfindung sind Gegenstand der abhängigen Ansprüche.

Die erfindungsgemäße Vorrichtung zur Übertragung umfasst einen Lichtleiter (1), welcher mit einem optischen Sender (2) und einem optischen Empfänger (3) derart verbunden ist, dass der Empfänger das vom Sender ausgesendete Licht empfangen kann. Der Lichtleiter kann beispielsweise ein planarer Lichtleiter, oder aber auch eine lichtleitende Faser, beispielsweise eine Kunststofffaser oder Glasfaser oder auch ein mit Gas oder Flüssigkeit gefüllter Schlauch sein. Im Falle von lichtleitenden Fasern ist vorzugsweise der Sender an dem ersten Ende und der Empfänger an dem zweiten Ende angeordnet. Zur Übertragung von Informationen umfasst der Lichtleiter im Bereich zwischen Sender und Empfänger mindestens ein lichtleitendes Medium, welches mindestens einen optischen Effekt aufweist, der durch externe elektrische-, magnetische- oder elektromagnetischen Felder bzw. Strahlung beeinflussbar ist. Dadurch kann das vom Sender eingespeiste Licht mittels Änderungen durch den optischen Effekt beeinflusst bzw. moduliert werden. Im Falle mehrerer Einkoppelstellen können selbstverständlich auch mehrere Sonden vorgesehen sein.

Zur Einkopplung dieser elektromagnetischen Felder bzw. Strahlung ist mindestens eine Sonde (4) vorgesehen, welche an einer Variablen oder vorgegebenen Position entlang des Verlaufs des Lichtleiters (1) angeordnet ist und zur Beaufschlagung des Lichtleiters durch elektromagnetische Felder bzw. Strahlung entsprechend den zu übertragenden Informationen ausgebildet ist.

Der wesentliche Unterschied der erfindungsgemäßen Vorrichtung gegenüber dem bekannten Stand der Technik besteht darin, das nicht mehr die zu übertragende Energie von außen in den Lichtleiter eingekoppelt wird, sondern der Energiefluss im Lichtleiter verändert wird. Dadurch ergeben sich wesentlich einfachere technische Lösungen. Beim Stand der Technik war eine aufwändige Fokussierung von Licht hoher Energiedichte in einen Lichtleiter mit kleinem Querschnitt notwendig. So musste das Licht auf einer exakt definierten Position unter einem engen Winkelbereich eingekoppelt werden. Dies verursachte insbesondere bei beweglichen Teilen einen hohen mechanischen Aufwand zur präzisen Lagerung und war äußerst empfindlich gegenüber Verschmutzungen. Bei der erfindungsgemäßen Vorrichtung ist keine exakte Fokussierung notwendig. Vielmehr genügt es dem Lichtleiter hinreichend hohe Energie zuzuführen, sodass er seine Eigenschaften entsprechend ändert. Dies kann beispielsweise durch Einkopplung hochfrequenter Energie durch Leitungen, Koppelflächen, Induktivitäten oder optische Strahlung erfolgen. Es wird Vorteilhafterweise dem Lichtleiter nicht nur punktförmig, sondern auf einer größeren Fläche Energie zugeführt. Damit verringert sich auch die Empfindlichkeit gegenüber Verschmutzungen wesentlich.

Bei der erfindungsgemäßen Vorrichtung sind optische Sender (2) bzw. optische Empfänger (3) vorzugsweise an unterschiedlichen Positionen des Lichtleiters (1) angeordnet. Allerdings können diese auch wahlweise an dem selben Ende eines Lichtleiters angebracht werden, falls auf Grund des zu Modulation verwendeten optischen Effekts eine Änderung der Reflexion im Lichtleiter erfolgt, so dass mehr oder weniger Licht vom Sender in den Empfänger reflektiert wird. Ebenso ist eine Anordnung am selben Ende dann sinnvoll, wenn das andere Ende bzw. ein anderes Ende des Lichtleiters (1) mit einem Spiegel zur Reflexion des Lichts versehen ist. Eine solche Ausführung bringt bei manchen optischen Effekten sogar eine Verstärkung des Effekts mit sich, da das Licht die Stelle der Sonde zweimal oder öfters passieren muss. Allerdings ist dies nicht mit allen optischen Effekten kompatibel, dass sich auch beim zweiten passieren des Lichtleiters der Effekt neutralisieren könnte.

In einer besonders vorteilhaften Ausgestaltung der Erfindung umfasst der Lichtleiter mindestens ein lichtleitendes Medium zwischen Sender und Empfänger, welches mindestens einen nichtlinearen optischen Effekt aufweist, wobei dieser durch externe Felder bzw. Strahlung beeinflussbar ist. Die nichtlineare Optik umfasst in allgemeiner Weise diejenigen optischen Phänomene, bei denen nicht die erste, sondern höhere Potenzen der elektrischen und magnetischen Feldstärke dominieren. Eine Definition des Begriffs findet sich in Harry Paul: " Lexikon der Optik"; Spektrum akademischer Verlag GmbH Heidelberg, Berlin; 1999; S 71.

Die derzeit bekannten und zur Modulation des Lichts geeigneten nicht linearen optischen Prozesse sind
- Harmonischenerzeugung
- Summenfrequenzerzeugung
- Differenfrequenzerzeugung
- Parametrische Fluoreszenz
- Parametrische Verstärkung
   (Prozess auch für einen optischen Verstärker anwendbar, der durch elektrische-, magnetische- oder elektromagnetische Felder modulierbar ist.)
- Parametrische Oszillation
- Vierwellenmischung
- Selbstfokussierung
   (Prozess auch für eine Lichtstrahlfokusierung an wendbar, bei der ohne Linsen fokusiert werden kann, was besonders vorteilhaft bei hohen Energiedichten ist, wie sie zum Beispiel bei Lasern für die Materialbearbeitung oder auch bei Laserdioden auftreten.)
- Photonenabsorption
- Photonenionisation
- Photonenemission
- Optische Gleichrichtung
- Intensitätsabhängiger Brechungsindex
- Induzierte Brechungsindexänderung
- Kohärente Wechselwirkung
- Kohärente Anti-Stokes Raman Streuung
- Stimulierte Raman Streuung
- Stimulierte Brillouin Streuung
- Phasenmodulation
- Self-switching und Induced-switching
   (Prozess auch für einen optischen Multiplexer und Demultiplexer bzw. als veränderliche optische Verdrahtung bei zum Beispiel Leiterplatten anwendbar.)

Mit diesen Prozessen ist es möglich die Amplitude, Phase, Wellenlänge bzw. Polarisation des übertragenen Lichtes entsprechend dem äußeren elektrischen-, magnetischen- und elektromagnetischen Feld zu verändern.

Die oben aufgeführten nichtlinearen optischen Prozesse werden durch eine Reihe von optischen Effekten ergänzt, die entweder wiederum selbst optisch nichtlinear sind oder aus einem oder mehreren der nicht linearen optischen Prozesse hervorgehen. Darüber hinaus gibt es natürlich auch Effekte die nicht auf die nichtlinearen optischen Prozesse zurückgehen aber dennoch für eine erfindungsgemäße Anwendung in Frage kommen. Die zur Zeit bekannten und im Sinne der Aufgabenstellung anwendbaren Effekte sind:
- Elektroabsorbtion
- Elektroreflexion
- Elektrooptischer Effekt ( z.B. Linearer- und Quadratischer elektrooptischer Effekt)
- Magnetooptischer Effekt
- Photorefraktiver Effekt
- Effekt des magnetischen Dichroismus

Gemäß der Erfindung ist bei keinem der nichtlinearen optischen Prozesse bzw. der beschriebenen Effekte eine direkte Einkopplung des zu übertragenden Lichtes selbst in den Lichtleiter mehr notwendig. Es erfolgt ausschließlich eine mittelbare Beeinflussung des Lichtes in einem geschlossenen Strahlengang.

Bei elektrischer bzw. magnetischer Einkopplung ergibt sich dadurch die höchste Unempfindlichkeit gegenüber Verschmutzung wie Kohlestaub.

Somit sind grundsätzlich alle optischen Effekte einsetzbar, welche eine Änderung der optischen Informationen in Abhängigkeit von dem durch die Sonde (4) zugeführten Signal bewirken. Dies kann beispielsweise eine Änderung von Amplituden, Phasen oder auch Wellenlängen sein. Entsprechende Mittel, welche amplitudenselektiv, phasenselektiv oder wellenlängenselektiv arbeiten sind daher vor bzw. zusammen mit dem Empfänger vorzusehen.

In einer weiteren vorteilhaften Ausgestaltung der Erfindung umfasst der Lichtleiter (1) wenigstens ein lichtleitendes Medium, welches in seinen optischen Eigenschaften durch externe elektrische und/oder magnetische Felder beeinflussbar ist. Entsprechend ist mindestens eine Sonde (4) zur Beaufschlagung des Lichtleiters durch elektrische und/oder magnetische Felder ausgebildet. Zur Beaufschlagung elektrischer Felder kann diese beispielsweise aus zwei Platten, welche den Lichtleiter einschließen, bestehen. Zur Erzeugung magnetische Felder können beispielsweise Spulen eingesetzt werden.
Die Informationsübertragung kann beispielsweise auf magnetooptischen oder elektrooptischen Effekten basieren. So kann das lichtleitende Medium beispielhaft mit Fremdatomen dotierte oxidische Kristalle enthalten. Durch äußere Magnetfelder der Sonde kann so beispielsweise durch den magnetooptischen Kerr-Effekt eine Beeinflussung der Drehung der Polarisationsachse und eine Änderung der Elektrizität von Licht bei der Reflexion an den Kristallen erfolgen. Ebenso kann aber auch durch den Cotton-Mouton-Effekt, den Voigt-Effekt oder auch den Majorana-Effekt eine lineare Doppelberechnung in einem transparenten Medium bei Transversaler Magnetisierung verursacht bzw. geändert werden. Als Medium dienen hier bevorzugt homogene, vorwiegend organische Flüssigkeiten im Falle des Cotton-Mouton-Effekts, Kobalt im Falle des Voigt-Effekt bzw. kolloide Lösungen beim Majorana-Effekt. Durch den Faraday-Effekt wird die Polarisationsebene beim Durchgang durch ein geeignetes Material wie z. B. Benzol abhängig von einem äußeren Magnetfeld geändert.

Ebenso ist basierend auf dem elektrooptischen Kerr-Effekt eine Signalübertragung möglich. So kann durch Anlegen eines äußeren elektrischen Feldes die optische Doppelberechnung geeigneter Materialien, wie beispielsweise Benzol, Nitrobenzol, Schwefelkohlenstoff oder auch Wasser beeinflusst werden. Unter Ausnutzung des Pockels-Effekts können durch das Anlegen elektrischer Felder die Doppelbrechungseigenschaften von Kristallen variiert werden. In den hier dargestellten Fällen kann die Auswertung beispielsweise mittels eines zusätzlichen Polarisationsfilters vor dem Empfänger erfolgen, so dass die Polarisationsänderungen in Amplitudenänderungen umgewandelt werden.

Um eine direkte Änderung der Amplitude zu bewirken kann beispielsweise die feldabhängige Änderung der Absorption in Halbleitermaterialien, der Franz-Keldysch-Effekt ausgenutzt werden. Ebenso kann zur Modulation der Amplituden der Stark-Effekt, welcher in Wasserstoff oder bestimmten Halbleitern auftritt, verwendet werden.

Ebenso sind auch weitere nichtlineare Effekte, welche beispielsweise abhängig von äußeren Feldern die Wellenlänge eines geführten Signals ändern bzw. eine Mischung zweier geführter Signale durchführen, einsetzbar. Das Ausgangssignal, einen optisches Signal mit geänderter Wellenlänge kann durch einen optischen Überlagerungsempfänger oder aber auch durch die Flanke eines Wellenlängenselektiven Filters erfolgen.

Diese Aufzählung ist keinesfalls abschließend, sie soll lediglich stellvertretend für eine ganze Gattung von Effekten einige dieser Effekte, deren Auswirkungen und deren Anwendung darstellen.

In einer weiteren vorteilhaften Ausgestaltung der Erfindung umfasst der Lichtleiter (1) wenigstens ein lichtleitendes Medium, welches in seinen optischen Eigenschaften durch externe optische Strahlung beeinflussbar ist. Entsprechend ist mindestens eine Sonde (4) zur Beaufschlagung des Lichtleiters mit optischer Strahlung ausgebildet. Sie weist Vorteilhafterweise eine modulierbar Lichtquelle, wie eine LED oder auch einen Laser bzw. eine Laserdiode auf. So kann beispielsweise durch den optischen Kerr-Effekt die Doppelberechnung eines isotropen Mediums, wie beispielsweise CS₂ durch ein Strahlung einer linear polarisiert Lichtquelle beeinflusst werden

Eine andere Ausgestaltung der Erfindung sieht vor, dass der Lichtleiter (1) wenigstens ein lichtleitendes Medium umfasst, welches in seinen optischen Eigenschaften durch unterschiedliche Arten elektromagnetischer Felder bzw. Strahlungen auf unterschiedliche Art und Weise beeinflussbar ist. Entsprechend ist mindestens eine Sonde (4) zur Emission bzw. Beaufschlagung des Lichtleiters mit unterschiedlichen Arten elektromagnetischer Felder bzw. Strahlung ausgebildet. Hierbei kann durch die Überlagerung mehrerer nichtlinearer Effekte eine wesentlich bessere Modulation des Signals erreicht werden. Ebenso ist es möglich durch unterschiedliche Arten der Modulation mehrere Signale gleichzeitig zu übertragen. Hier ist es insbesondere sinnvoll, stückweise entlang des Verlaufs des Lichtleiters unterschiedliche Materialien vorzusehen, welche durch unterschiedliche Effekte beeinflusst werden können. So könnten beispielsweise Effekte zur Polarisationsdrehung und zur Dämpfung abhängig von externen Feldern miteinander kombiniert werden. Noch vorteilhafter wäre eine Kombination wenigstens eines dieser Effekte mit einem weiteren Effekt, welcher die Wellenlänge des übertragenen Lichtes ändert. Hier ist eine Auswertung mittels wellenlängenselektiver Filter besonders einfach. Ebenso können grundsätzlich mehrere Arten von Effekten herangezogen werden, die die Wellenlängen des Lichts auf verschiedene Weise ändern. Die entsprechende Auswertung erfolgt mit verschiedenen Wellenlängenselektiven Empfängern.

In einer weiteren vorteilhaften Ausgestaltung der Erfindung umfasst der Lichtleiter (1) wenigstens ein lichtleitendes Medium, das in seinen optischen Eigenschaften durch elektrische sowie magnetische Felder auf unterschiedliche Art und Weise beeinflussbar ist. Entsprechend ist mindestens eine Sonde (4) zur Beaufschlagung des Lichtleiters (1) durch elektrische bzw. magnetische Felder ausgebildet.

In einer weiteren vorteilhaften Ausgestaltung der Erfindung umfasst der Lichtleiter (1) wenigstens ein lichtleitendes Medium, welches in seinen optischen Eigenschaften durch elektrische Felder sowie optische Strahlung beeinflussbar ist. Entsprechend ist mindestens eine Sonde (4) zur Abgabe von elektrischen Feldern sowie optische Strahlung ausgebildet.

In einer anderen Ausgestaltung der Erfindung ist der optische Sender (2) zur gleichzeitigen Aussendung von Licht mit mehreren Wellenlängen ausgebildet. Weiterhin umfasst der Lichtleiter (1) wenigstens ein lichtleitendes Medium, welches auf unterschiedliche Arten basierend auf unterschiedlichen Effekten der nichtlinearen Optik in seinen optischen Eigenschaften änderbar ist. Mindestens eine Sonde (4) ist zur getrennten Anregung verschiedene Effekte ausgebildet. Der optische Empfänger (3) ist zum selektiven Empfang der durch die unterschiedlichen optischen Effekte modulierten Lichtwellenlängen ausgebildet. Somit sind mehrere Signale gleichzeitig selektiv übertragbar.

In einer weiteren vorteilhaften Ausgestaltung der Erfindung wird in dem zuvor genannten Ausführungsfall an Stelle des selektiven Empfängers ein Empfänger eingesetzt, welcher mehrere Signale gleichzeitig empfängt. Durch die gleichzeitige Übertragung mehrerer Signale sowie deren Modulation basierend auf unterschiedlichen optischen Effekten lässt sich eine besonders störarme und zuverlässige Übertragung erreichen. Zudem erhöht sich der Empfangspegel am Empfänger durch die gleichzeitige Übertragung mehrerer Signale und der Signal-Rauschabstand wird verbessert. Hierzu weist der optische Empfänger (3) Mittel auf, um das empfangene Licht in mehrere unterschiedliche Anteile aufzuspalten. Diese werden dann ausgewertet und vorzugsweise miteinander verglichen. Dies ist insbesondere dann sinnvoll, wenn durch die Modulation am Ort der Sonde oder durch die spätere Führung des lichtes im Lichtleiter unterschiedliche Arten der Modulation des Lichts hervorgerufen werden. So kann beispielsweise gleichzeitig eine Modulation durch Änderung der spektralen Zusammensetzung sowie der Polarisation erfolgen. Werden beide Effekte nun zusammen ausgewertet, so kann sich durch Addition ein größeres Signal ergeben. Alternativ kann durch Korrelation die Qualität des Signals bzw. die Korrektheit der übertragenen Informationen überprüft werden.

Eine weitere Ausgestaltung der Erfindung sieht vor, dass der Lichtleiter (1) Abschnitte zu Lichtleitung (6) sowie Abschnitte zu Modulation (7) umfasst. Damit können optische Elemente eingesetzt werden, welche für die jeweilige Aufgabe optimiert sind. So kann ein kurzer Abschnitt Lichtleiter, welches auf wichtige Übertragungseigenschaften wie geringe Dämpfungen und geringe Dispersion optimiert ist zu Lichtleitung eingesetzt werden. Im Wechsel mit diesen kann dann wieder ein kurzer Abschnitt eines Modulators, welcher auf seine Modulationseigenschaften hin optimiert ist, vorgesehen sein. Wahlweise können auch unterschiedliche Abschnitte mit unterschiedlichen Modulationseigenschaften (optische Effekte) vorgesehen sein. Durch einen Aufbau, bei dem abwechselnd unterschiedliche diese Abschnitte eingesetzt sind, sind durch die Optimierung der jeweiligen Abschnitte für die jeweilige Aufgabe bessere Eigenschaften erreichbar, als dies mit einem kombinierten Lichtleiter, welcher gleichzeitig zu Modulation ausgebildet ist. Damit insbesondere bei einer Übertragung von einer beweglichen Sonde (4) keine Unterbrechungen auftreten, muss diese Sonde so groß dimensioniert werden, dass sie immer in Eingriff mit mindestens einem, besser zwei Abschnitten zu Modulation steht.

Eine andere vorteilhafte Ausgestaltung der Erfindung sieht eine Amplitudenregelschleife vor, welche die Amplitude der optischen Sendeleistung des optischen Senders (2) derart regelt, dass wahlweise der optische Signalpegel am Eingang des optischen Empfängers (3) oder auch der elektrische Signalpegel am Ausgang des optischen Empfängers (3) auf einem konstanten Wert gehalten wird. Zur Realisierung der ersten Ausführung sind zusätzliche optische Messeinrichtungen notwendig, welche beispielsweise über einen optischen Splitter an den Lichtleiter (1) angekoppelt werden können. Die zweite Ausführungsform ist wesentlich vorteilhafter zu gestalten, dass diese bereits eine elektrische Messgröße aufweist.

Weiterhin ist es vorteilhaft, Mittel zur Amplitudenregelung des Sondesignals derart vorzusehen, dass insbesondere der Modulationsgrad oder aber auch der Signalpegel am optischen Empfänger auf eine konstanten Wert regelbar sind. Hierbei können wie zuvor beschrieben, wahlweise optische oder elektrische Größen geregelt werden.

In einer anderen Ausgestaltung der Erfindung ist der zusätzliche optische Empfänger vorgesehen, welcher beispielsweise durch einen optischen Splitter, an den Lichtleiter (1) angekoppelt ist und dasselbe Signal misst, welches der optische Empfänger empfängt. Weiterhin dient dieser Empfänger ausschließlich dazu Signalpegel bzw. Modulationsgrade zu ermitteln. Damit kann dieser zusätzliche Empfänger oftmals eine geringere Bandbreite als der optische Empfänger (3) aufweisen und ist somit kostengünstiger realisierbar.

Eine vorteilhafte Weiterbildungen der Erfindung besteht darin, dass der Lichtleiter (1) wenigstens zwei Segmente aufweist, von denen eines mit dem optischen Sender (2) und ein anderes mit dem optischen Empfänger (3) verbunden ist. Mindestens eines dieser Segmente weist ein optisches Medium auf, welches durch Signale von der Sonde derart gesteuert werden kann, das Licht von einem ersten Segment in ein weiteres Segment übergekoppelt wird. So könnte beispielsweise eine solche Anordnung derart ausgestaltet sein, dass im Ruhezustand kein Licht zwischen verschiedenen Segmenten übergekoppelt wird. In diesen Fall erreicht den optischen Empfänger kein Signal. Wird dagegen nun ein Signal von der Sonde abgegeben, so findet eine Überkopplung zwischen den Segmenten statt. Somit wird ein Signal an den Empfänger zur Auswertung weitergeleitet.

Eine andere Ausgestaltung der Erfindung besteht darin, dass der optische Empfänger (3) als Differenzempfänger ausgelegt ist. Er weist Mittel auf, um das vom Lichtleiter (1) geführte Signal in wenigstens einen unmodulierten und wenigstens einen unmodulierten Anteil aufzuspalten. Dies kann beispielsweise durch Phasen-, Polarisations-, Spektral- oder andere Filter erreicht werden. Ferner ist der optische Empfänger derart ausgestaltet, dass er einen unmodulierten mit einem modulierten Anteil vergleicht.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.

Fig. 1 zeigt in allgemeiner Form schematisch eine erfindungsgemäße Vorrichtung.

Der Einfachheit halber ist ein erfindungsgemäßer Lichtleiter in einer linearen Anordnung dargestellt. Selbstverständlich kann er auch beliebige Kurven umfassen bzw. zu einem Kreis gebogen sein. Ein Lichtleiter (1) ist an einem Ende mit einem optischen Sender (2) und an dem anderen Ende mit einem optischen Empfänger (3) versehen. Gegenüber dem Lichtleiter ist eine Sonde (4) beweglich angeordnet. Der Bewegungspfeil (5) soll diese Bewegung entlang des Lichtleiters verdeutlichen. So kann beispielsweise eine stationäre Einheit aus Lichtleiter (1), Sender (2) und Empfänger (3) bestehen, während die diese gegenüber bewegliche Einheit eine Sonde (4) umfasst. Dass die Bewegung nur eine Frage der Position des Betrachters ist können die Funktionen der beweglichen bzw. stationären Einheiten vertauscht werden. Der optische Sender (2) speist Licht in den Lichtleiter (1) ein. Dieses Licht wird durch den Lichtleiter entlang der Bahn des Lichtleiters, entsprechend der Bahn der Bewegung, zu dem optischen Empfänger (3) übertragen. Dieses Licht wird nun entsprechend der durch die Sonde eingekoppelten Information moduliert. Hierzu weist der Lichtleiter wenigstens ein lichtleitenden Medium auf, das wenigstens einen nichtlinearen optischen Effekt aufweist, welcher durch externe elektromagnetische Felder beeinflussbar ist. Die zur Beeinflussung notwendigen Felder werden durch die Sonde (4) erzeugt. So kann die Sonde in einem besonders einfachen Fall aus zwei oder mehreren Kondensatorplatten bestehen, zwischen denen das lichtleitende Medium verläuft. Durch Anlegen einer elektrischen Spannung mit dem Modulationssignal kann nun das im lichtleitenden Medium transportierte Licht entsprechend dieses Signals moduliert werden. Ebenso könnten auch Spulen zur Erzeugung von Magnetfeldern vorgesehen sein. Zur Erzeugung elektromagnetischer Felder und Wellen können dem Stand der Technik entsprechende Leiterstrukturen, beispielsweise Streifenleitungen in der Nähe des lichtleitenden Mediums angebracht werden. Für den Fall der Modulation (Beeinflussung der Übertragungseigenschaften) durch Licht können Lichtquellen, wie beispielsweise LEDs oder Laserdioden derart angebracht werden, dass sie auf das lichtleitende Medium abstrahlen. Voraussetzung für das korrekte Funktionieren dieser Sonden ist selbstverständlich die entsprechende Ausgestaltung des Lichtleiters, so dass dieser gerade auf die von der Sonde abgegebene Energieform reagiert.

Fig. 2 zeigt schematisch eine vorteilhafte Ausgestaltung der Erfindung, bei der ausschließlich zur Lichtleitung vorgesehene Abschnitte (6) abwechselnd mit zur Modulation ausgestalteten Abschnitten (7) des Lichtleiters vorgesehen sind. Hierbei können jeweils die Aufgaben der Lichtleitung beziehungsweise der Modulation optimiert werden. So können die Abschnitte zur Lichtleitung (6) auf minimale Dämpfung und andere Übertragungseigenschaften wie beispielsweise Dispersion hin optimiert werden. Ebenso können die Abschnitte zur Modulation (7) auf ihre Modulationseigenschaften hin optimiert werden. In manchen Aufgabenfällen kann eine stückweise Übertragung, bei der die Sonde gerade über einen Abschnitt zur Modulation positioniert ist, ausreichend sein. Um nun über die ganze Übertragungsstrecke eine kontinuierliche Übertragung sicherzustellen ist die Sonde so groß zu dimensionieren, dass sie immer wenigstens einen, vorteilhafterweise aber zwei Abschnitte überdeckt.

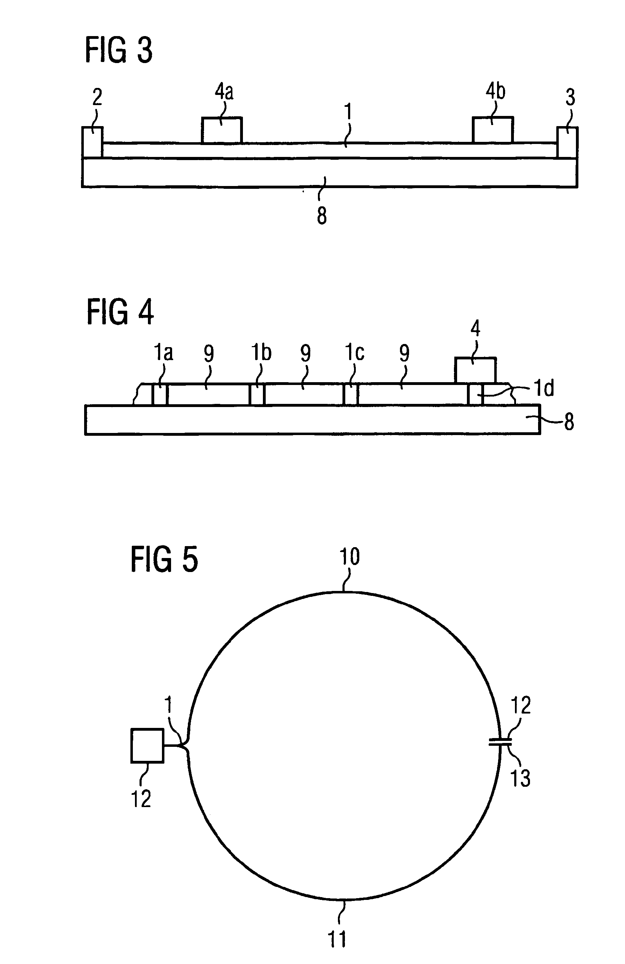

In Fig. 3 ist eine besonders einfache Ausführungsform einer optischen Leiterplatte bzw. eines optischen Bussystems in Seitenansicht dargestellt. Hierin ist der Lichtleiter (1) auf einer Trägerplatte (8) angeordnet. Ein optische Sender (2), welcher an einem Ende des Lichtleiters angebracht ist, speist Licht in diesen ein. Zum Empfang des Lichts ist ein optischer Empfänger (3), welcher an dem entgegengesetzten Ende des Lichtleiters angebracht ist vorgesehen. Zur Beeinflussung des im Lichtleiter geführten Lichtes sind an verschiedenen Positionen Sonden (4a, 4b) vorgesehen. Dieser Sonden können wahlweise festen Positionen zugeordnet sein oder auch variabel positionierbar sein. Mit einer solchen Anordnung lassen sich neben einzelnen Leiterplatten auch vorteilhaft Bussysteme oder auch sogenannte Backplanes gestalten. So wird im letzten Fall erst durch das Einschieben eines Moduls oder einer Leiterplatte eine Sonde in den Nähe des Lichtleiters gebracht, um den Signalfluss in diesen zu steuern und somit Informationen über den Bus zu übertragen. In einer besonders vorteilhaften Ausführungsform kann eine solche Anordnung mit einer Gestaltung entsprechend Fig. 2 kombiniert werden. Damit weist der Lichtleiter ausschließlich zur Lichtleitung vorgesehene Abschnitte abwechselnd mit zur Modulation ausgestalteten Abschnitten auf. Die Ankopplung der Sonde erfolgt dann jeweils an den zu Modulation ausgestalteten Abschnitten.

Fig. 4 zeigt eine der Fig. 3 entsprechende Anordnung, welche um 90 Grad gedreht ist. Zur mechanischen Aufnahme dient auch hier die Trägerplatte (8). Auf dieser sind beispielhaft vier Lichtleiter (1a, 1b, 1c, 1d) vorgesehen. Die Zwischenräume zwischen den einzelnen Lichtleitern sind durch ein Füllmaterial aufgefüllt. Die Funktion dieses Füllmaterial so ist es, eine glatte Oberfläche zu erreichen und weiterhin die Lichtleiter optisch voneinander zu entkoppeln. Selbstverständlich sind auch Ausführungsformen ohne ein solches Füllmaterial denkbar. In das Füllmaterial selbst oder auch auf die ebene Oberfläche können nun weitere optische bzw. elektrischen Leiter eingebracht bzw. aufgebracht sein. Wegen der besseren Übersichtlichkeit sind in dieser Darstellung optische Sender (2) bzw. optische Empfänger (3) weggelassen. Eine Sonde (4) dient zur Steuerung des durch den Lichtleiter transportierten Lichtes. Gerade bei Anordnungen mit mehreren Lichtleitern ist es vorteilhaft, mehrere Lichtleiter aus einem einzigen optischen Sender (2) zu versorgen. Dies kann beispielsweise durch dem Stand der Technik entsprechende Koppler erfolgen. Erfindungsgemäß kann auch mittels einer Sonde die Überkopplung von Licht eines Lichtleiters in einen zweiten Lichtleiter zur Steuerung von Signalflüssen herangezogen werden.

In Fig. 5 ist noch ein besonders einfaches und gleichzeitig effizientes Beispiel einer erfindungsgemäßen Vorrichtung dargestellt. So ist hierin der Lichtleiter (1) in ein erstes Segment (10) und ein zweites Segment (11) unterteilt. Beide Segmente sind parallel mit einer kombinierten Sende- und Empfangseinheit (12), welche sowohl den optischen Sender (2) als auch den optischen Empfänger (3) enthält verbunden. Weiterhin sind beide Segmente mit einem ersten Abschlusselement (12) sowie einen zweiten Abschlusselement (13) abgeschlossen. Diese Abschlusselement den können wahlweise optische Reflexionsfrei Abschlüsse oder auch Spiel sein. Welche Art des Abschlusses gewählt wird hängt unter anderem auch von dem zur Modulation verwendeten optischen Effekt ab. Verursacht der optische Effekt selbst eine Reflexion, so sind bevorzugt Reflexionsfrei Abschlüsse vorzusehen. In anderen Fällen kann nur dann ein Signal zum Empfänger zurück gekoppelt werden, wenn die Abschlüsse entsprechende Reflexionseigenschaften aufweisen. Die Auswertung des optischen Signals in der optischen Sende- und Empfangseinheit (12) erfolgt auf bekannte Art und Weise, bevorzugt aber durch eine Messung der Phasendifferenz zwischen dem ersten und dem zweiten Segment. Diese Phasenmessung wird durch die Bewegung der Objekte kaum beeinflusst, dass diese in der Regel langsam gegenüber der Modulationsfrequenz erfolgt.

### Bezugszeichenliste

- 1: Lichtleiter
- 2: optischer Sender
- 3: optischer Empfänger
- 4: Sonde
- 5: Richtungspfeil
- 6: Abschnitte zur Lichtleitung
- 7: Abschnitte zur Modulation
- 8: Trägerplatte
- 9: Füllmaterial
- 10: erstes Segment des Lichtleiters
- 11: zweites Segment des Lichtleiters
- 12: kombinierten Sende- und Empfangseinheit
- 13: erstes Abschlusselement
- 14: zweites Abschlusselement

## Patentansprüche

1. Vorrichtung zur Übertragung von Signalen zwischen zwei gegeneinander beweglichen Einheiten umfassend an der stationären Einheit
- einen Lichtleiter (1), welcher zumindest einen Hohlkörper oder Teile eines Hohlkörpers mit innen verspiegelter Oberfläche zur Lichtleitung durch Reflexion an der verspiegelten Oberfläche oder einen Körper aus einem durchsichtigen Material, umgeben von wenigstens einem Medium mit niedrigerem Brechungsindex zur Lichtleitung durch Totalreflexion an der Grenzfläche zwischen Körper und Medium aufweist und
- einen optischen Sender (2), welcher mit wenigstens einem Punkt des Lichtleiters (1) zur Einspeisung optischer Signale verbunden ist, und
- einen optischen Empfänger (3), welcher mit wenigstens einem Punkt des Lichtleiters (1) an dem die Signale des optischen Senders empfangbar sind zum Empfang optischer Signale verbunden ist,
- der Lichtleiter (1) mindestens ein lichtleitendes Medium in einem optischen Pfad zwischen Sender und Empfänger umfasst, welches mindestens einen optischen Effekt aufweist, welcher durch externe elektromagnetische Felder bzw. Strahlung beeinflussbar ist, und durch den somit die Übertragungseigenschaften des Mediums und auch des Lichtleiters entsprechend der externen elektromagnetischen Felder bzw. Strahlung beeinflussbar ist, und an der beweglichen Einheit
- mindestens eine Sonde (4) vorgesehen ist, welche beweglich entlang des Verlaufs des Lichtleiters (1) angeordnet ist und zur Beaufschlagung des Lichtleiters durch elektrische-, magnetische- oder elektromagnetische Felder bzw. Strahlung entsprechend den zu übertragenden Informationen ausgebildet ist, so dass sich entsprechend den zu übertragenden Informationen die Übertragungseigenschaften des Lichtleiters (1) ändern.

2. Vorrichtung zur Übertragung von Signalen zwischen zwei gegeneinander beweglichen Einheiten umfassend an der beweglichen Einheit
- einen Lichtleiter (1), welcher zumindest einen Hohlkörper oder Teile eines Hohlkörpers mit innen verspiegelter Oberfläche zur Lichtleitung durch Reflexion an der verspiegelten Oberfläche oder einen Körper aus einem durchsichtigen Material, umgeben von wenigstens einem Medium mit niedrigerem Brechungsindex zur Lichtleitung durch Totalreflexion an der Grenzfläche zwischen Körper und Medium aufweist und
- einen optischen Sender (2), welcher mit wenigstens einem Punkt des Lichtleiters (1) zur Einspeisung optischer Signale verbunden ist, und
- einen optischen Empfänger (3), welcher mit wenigstens einem Punkt des Lichtleiters (1) an dem die Signale des optischen Senders empfangbar sind zum Empfang optischer Signale verbunden ist,
- der Lichtleiter (1) mindestens ein lichtleitendes Medium in einem optischen Pfad zwischen Sender und Empfänger umfasst, welches mindestens einen optischen Effekt aufweist, welcher durch externe elektromagnetische Felder bzw. Strahlung beeinflussbar ist, und durch den somit die Übertragungseigenschaften des Mediums und auch des Lichtleiters entsprechend der externen elektromagnetischen Felder bzw. Strahlung beeinflussbar ist, und an der stationären Einheit
- mindestens eine Sonde (4) vorgesehen ist, welche eine bewegliche Anordnung des Lichtleiters (1) ermöglicht und zur Beaufschlagung des Lichtleiters durch elektrische-, magnetische- oder elektromagnetische Felder bzw. Strahlung entsprechend den zu übertragenden Informationen ausgebildet ist, so dass sich entsprechend den zu übertragenden Informationen die Übertragungseigenschaften des Lichtleiters (1) ändern.

3. Vorrichtung nach Anspruch 1 oder 2,
**dadurch gekennzeichnet, dass**
der Lichtleiter (1) mindestens ein lichtleitendes Medium zwischen Sender und Empfänger umfasst, welches mindestens einen nichtlinearen optischen Effekt aufweist, welcher durch externe Felder bzw. Strahlung beeinflussbar ist.

4. Vorrichtung nach Anspruch 1, 2 oder 3,
**dadurch gekennzeichnet, dass**
der Lichtleiter (1) wenigstens ein lichtleitendes Medium umfasst, welches in seinen optischen Eigenschaften durch externe elektrische und/oder magnetische Felder beeinflussbar ist, und
mindestens eine Sonde (4) vorgesehen ist, welche zur Beaufschlagung des Lichtleiters (1) durch elektrische und/oder magnetische Felder entsprechend den zu übertragenden Informationen ausgebildet ist.

5. Vorrichtung nach Anspruch 1, 2 oder 3,
**dadurch gekennzeichnet, dass**
der Lichtleiter (1) wenigstens ein lichtleitendes Medium umfasst, welches in seinen optischen Eigenschaften durch externe optische Strahlung beeinflussbar ist, und
mindestens eine Sonde (4) vorgesehen ist, welche zur Beaufschlagung des Lichtleiters (1) durch optische Strahlung entsprechend den zu übertragenden Informationen ausgebildet ist.

6. Vorrichtung nach einem der vorhergehenden Ansprüche,
**dadurch gekennzeichnet, dass**
der Lichtleiter (1) wenigstens ein lichtleitendes Medium umfasst, welches in seinen optischen Eigenschaften durch unterschiedliche Arten externer elektromagnetischer Felder bzw. Strahlung auf unterschiedliche Art und Weise beeinflussbar ist, und
mindestens eine Sonde (4) vorgesehen ist, welche zur Beaufschlagung des Lichtleiters (1) durch mehrere unterschiedliche Arten elektromagnetischer Felder bzw. Strahlung entsprechend den zu übertragenden Informationen ausgebildet ist.

7. Vorrichtung nach Anspruch 6,
**dadurch gekennzeichnet, dass**
der Lichtleiter (1) wenigstens ein lichtleitendes Medium umfasst, welches in seinen optischen Eigenschaften durch elektrische sowie magnetische Felder auf unterschiedliche Art und Weise beeinflussbar ist, und
mindestens eine Sonde (4) vorgesehen ist, welche zur Beaufschlagung des Lichtleiters (1) durch elektrische sowie magnetische Felder entsprechend den zu übertragenden Informationen ausgebildet ist.

8. Vorrichtung nach Anspruch 7,
**dadurch gekennzeichnet, dass**
der Lichtleiter (1) wenigstens ein lichtleitendes Medium umfasst, welches in seinen optischen Eigenschaften durch elektrische Felder sowie optische Strahlung auf unterschiedliche Art und Weise beeinflussbar ist, und
mindestens eine Sonde (4) vorgesehen ist, welche zur Beaufschlagung des Lichtleiters (1) durch elektrische Felder sowie optische Strahlung entsprechend den zu übertragenden Informationen ausgebildet ist.

9. Vorrichtung nach einem der Ansprüche 6 bis 8,
**dadurch gekennzeichnet, dass**
der optische Sender (2) zur gleichzeitigen Aussendung von Licht mit mehreren vorgegebenen Wellenlängen ausgebildet ist und
diese Wellenlängen auf die unterschiedlichen Arten der Beeinflussung durch externe durch elektrische- , magnetische- oder elektromagnetischer Felder abgestimmt sind und
der optische Empfänger (3) zum selektiven Empfang der unterschiedlichen Wellenlängen ausgebildet ist.

10. Vorrichtung nach einem der Ansprüche 6 bis 8,
**dadurch gekennzeichnet, dass**
der optische Sender (2) zur gleichzeitigen Aussendung von Licht mit mehreren vorgegebenen Wellenlängen ausgebildet ist und
diese Wellenlängen auf die unterschiedlichen Arten der Beeinflussung durch externe elektromagnetischer Felder abgestimmt sind und
der optische Empfänger (3) zum summarischen Empfang der unterschiedlichen Wellenlängen ausgebildet ist.

11. Vorrichtung nach einem der vorhergehenden Ansprüche,
**dadurch gekennzeichnet, dass**
der Lichtleiter (1) Abschnitte zur Lichtleitung (6) sowie Abschnitte zur Modulation (7) umfasst.

12. Vorrichtung nach einem der vorhergehenden Ansprüche,
**dadurch gekennzeichnet, dass**
der optische Sender (2) Mittel zur Amplitudenregelung der abgegebenen Sendeleistung derart aufweist, dass optische Signalpegel am Eingang des optischen Empfängers (3) bzw. elektrische Signalpegel am Ausgang des optischen Empfängers (3) einen konstanten Wert haben.

13. Vorrichtung nach einem der vorhergehenden Ansprüche,
**dadurch gekennzeichnet, dass**
der Sonde (4) Mittel zur Amplitudenregelung derart zugeordnet sind, dass optische Signalpegel oder Modulationsgrade am Eingang des optischen Empfängers (3) bzw. elektrische Signalpegel oder Modulationsgrade am Ausgang des optischen Empfängers (3) einen konstanten Wert haben.

14. Vorrichtung nach Anspruch 12 oder 13,
**dadurch gekennzeichnet, dass**
ein weiterer optische Empfänger zum Empfang der optischen Signale vorgesehen ist, welcher ausschließlich Signalpegel bzw. Modulationsgrade ermittelt.

15. Vorrichtung nach einem der vorhergehenden Ansprüche,
**dadurch gekennzeichnet, dass**
der Lichtleiters (1) wenigstens ein erstes Segment (10) und ein zweites Segment (11) aufweist, wobei wenigstens ein erstes Segment mit dem optischen Sender (2) und wenigstens ein zweites Segment mit dem optischen Empfänger (3) verbunden ist und weiterhin mindestens einer der Lichtleiter ein Medium aufweist, welches durch die Sonde (4) derart beeinflussbar ist, dass Licht eines ersten Segments in ein zweites Segment überkoppelt.

16. Vorrichtung nach einem der vorhergehenden Ansprüche,
**dadurch gekennzeichnet, dass**
der optische Empfänger (3) als Differenzempfänger ausgestaltet ist, welcher geeignete Mittel aufweist, um das vom Lichtleiter (1) zugeführte Licht in einen modulieren und einen unmodulierten Anteil aufzuspalten und die Differenz der beiden Anteile auszuwerten.

## Claims

1. Device for transmitting signals between two units that are movable relative to each other, comprising on a stationary unit:
- a light guide (1) having at least one hollow body or parts of a hollow body with an inner mirror-finished surface for guiding light by reflection on the mirror-finished surface, or having a body of a transparent material, surrounded by at least one medium of a lower refractive index for guiding light by total reflection at a boundary face between the body and the medium; and
- an optical transmitter (2) connected to at least one point of the light guide (1) for feeding-in optical signals; and
- an optical receiver (3) connected for receiving optical signals to at least one point of the light guide (1) at which the signals from the optical transmitter can be received;
- the light guide (1) comprising at least one light-guiding medium in an optical path between the transmitter and the receiver, the medium exhibiting at least one optical effect which can be affected by external electromagnetic fields or radiation, and by means of which therefore the transmission characteristics of the medium and also of the light guide can be affected according to the external electromagnetic fields or radiation; and
- at least one probe (4) being provided on the movable unit and disposed to be movable along the course of the light guide (1) and adapted to apply electric, magnetic or electro-magnetic fields or radiation to the light guide in accordance with information to be transmitted, so that the transmission characteristics of the light guide (1) change in accordance with the information to be transmitted.

2. Device for transmitting signals between two units that are movable relative to each other, comprising on a movable unit:
- a light guide (1) having at least one hollow body or parts of a hollow body with an inner mirror-finished surface for guiding light by reflection on the mirror-finished surface, or having a body of a transparent material, surrounded by at least one medium of a lower refractive index for guiding light by total reflection at a boundary face between the body and the medium; and
- an optical transmitter (2) connected to at least one point of the light guide (1) for feeding-in optical signals; and
- an optical receiver (3) connected for receiving optical signals to at least one point of the light guide (1) at which the signals of the optical transmitter can be received;
- the light guide (1) comprising at least one light-guiding medium in an optical path between the transmitter and the receiver, the medium exhibiting at least one optical effect which can be affected by external electromagnetic fields or radiation, and by means of which therefore the transmission characteristics of the medium and also of the light guide can be affected according to the external electromagnetic fields or radiation; and
- at least one probe (4) being provided on the stationary unit for enabling a movable arrangement of the light guide (1) and adapted to apply electric, magnetic or electro-magnetic fields or radiation to the light guide in accordance with information to be transmitted, so that the transmission characteristics of the light guide (1) change in accordance with the information to be transmitted.

3. Device according to claim 1 or 2,
**characterized in that**
the light guide (1) comprises at least one light-guiding medium between the transmitter and the receiver, the light-guiding medium exhibiting at least one nonlinear optical effect that can be affected by external fields or radiation.

4. Device according to claim 1, 2 or 3,
**characterized in that**
the light guide (1) comprises at least one light-guiding medium having optical properties which can be affected by external electric and/or magnetic fields; and at least one probe (4) is provided that is adapted to apply to the light guide (1) electric and/or magnetic fields in accordance with the information to be transmitted.

5. Device according to claim 1, 2 or 3,
**characterized in that**
the light guide (1) comprises at least one light-guiding medium having optical properties which can be affected by external optical radiation; and
at least one probe (4) is provided that is adapted to apply to the light guide (1) optical radiation in accordance with the information to be transmitted.

6. Device according to any one of the preceding claims,
**characterized in that**
the light guide (1) comprises at least one light-guiding medium having optical properties which can be affected in different ways and manner by different kinds of external electromagnetic fields or radiation; and at least one probe (4) is provided that is adapted to apply to the light guide (1) a plurality of different kinds of electromagnetic fields or radiation in accordance with the information to be transmitted.

7. Device according to claim 6,
**characterized in that**
the light guide (1) comprises at least one light-guiding medium having optical properties which can be affected in different ways and manner by electric and also magnetic fields; and
at least one probe (4) is provided that is adapted to apply to the light guide (1) electric and also magnetic fields in accordance with the information to be transmitted.

8. Device according to claim 7,
**characterized in that**
the light guide (1) comprises at least one light-guiding medium having optical properties which can be affected in different ways and manner by electric fields and also optical radiation; and at least one probe (4) is provided that is adapted to apply to the light guide (1) electric fields and also optical radiation in accordance with the information to be transmitted.

9. Device according to any one of claims 6 to 8,
**characterized in that**
the optical transmitter (2) is adapted to emit light at a plurality of given wavelengths simultaneously; and
these wavelengths are matched to the different ways of being affected by external electric, magnetic, or electromagnetic fields; and
the optical receiver (3) is adapted to receive the different wavelengths selectively.

10. Device according to any one of claims 6 to 8,
**characterized in that**
the optical transmitter (2) is adapted to emit light at a plurality of given wavelengths simultaneously; and
these wavelengths are matched to the different ways of being affected by external electromagnetic fields; and the optical receiver (3) is adapted for summary reception of the different wavelengths.

11. Device according to any one of the preceding claims,
**characterized in that**
the light guide (1) comprises sections (6) for guidance of light, and also sections (7) for modulation.

12. Device according to any one of the preceding claims,
**characterized in that**
the optical transmitter (2) has means for regulating the amplitude of the emitted transmitted power in such manner that optical signal levels at the input of the optical receiver (3), or electrical signal levels at the output of the optical receiver (3), have a constant value.

13. Device according to any one of the preceding claims,
**characterized in that**
means for amplitude regulation are assigned to the probe (4) in such manner that optical signal levels or degrees of modulation at the input of the optical receiver (3), or electrical signal levels or degrees of modulation at the output of the optical receiver (3), have a constant value.

14. Device according to claim 12 or 13,
**characterized in that**
another optical receiver that determines exclusively signal levels or degrees of modulation is provided for receiving the optical signals.

15. Device according to any one of the preceding claims,
**characterized in that**
the light guide (1) has at least one first segment (10) and one second segment (11), at least one first segment being connected to the optical transmitter (2), and at least one second segment to the optical receiver (3), and furthermore, at least one of the light guides comprises a medium that can be affected by the probe (4) in such manner that light of a first segment is cross-coupled into a second segment.

16. Device according to any one of the preceding claims,
**characterized in that**
the optical receiver (3) is designed to be a differential receiver having suitable means for splitting light supplied from the light guide (1) into a modulated and a non-modulated portion, and for evaluating the difference between the two portions.

## Revendications

1. Dispositif de transmission de signaux entre deux unités mobiles l'une par rapport à l'autre comprenant au niveau de l'unité stationnaire
- un guide de lumière (1) qui comprend au moins un corps creux ou des parties d'un corps creux avec une surface réfléchissante interne pour guider la lumière par réflexion sur la surface réfléchissante, ou un corps en matériau transparent, entouré par au moins un milieu avec un indice de réfraction plus faible pour guider la lumière par réflexion totale sur la surface limite entre le corps et le milieu, et
- un émetteur optique (2) qui est relié à au moins un point du guide de lumière (1) pour alimenter en signaux optiques, et
- un récepteur optique (3) qui est relié à au moins un point du guide de lumière (1) sur lequel les signaux de l'émetteur optique peuvent être reçus pour la réception de signaux optiques,
- le guide de lumière (1) comprenant au moins un milieu guidant la lumière dans un chemin optique entre l'émetteur et le récepteur, lequel présente au moins un effet optique, qui peut être influencé par des champs et/ou un rayonnement électromagnétiques externes, et par lequel les propriétés de transmission du milieu et également du guide de lumière peuvent être influencées en fonction des champs et/ou du rayonnement électromagnétiques externes, et
au niveau de l'unité mobile
- au moins une sonde (4) est prévue, laquelle est disposée de manière mobile le long du parcours du guide de lumière (1), et est conçue pour amener au guide de lumière des champs et/ou un rayonnement électriques, magnétiques ou électromagnétiques correspondant aux informations à transmettre, de sorte que les propriétés de transmission du guide de lumière (1) se modifient en fonction des informations à transmettre.

2. Dispositif de transmission de signaux entre deux unités mobiles l'une par rapport à l'autre comprenant sur l'unité mobile
- un guide de lumière (1) qui comprend au moins un corps creux ou des parties d'un corps creux avec une surface réfléchissante interne pour guider la lumière par réflexion sur la surface réfléchissante, ou un corps en matériau transparent, entouré par au moins un milieu avec un indice de réfraction plus faible pour guider la lumière par réflexion totale sur la surface limite entre le corps et le milieu, et
- un émetteur optique (2) qui est relié à au moins un point du guide de lumière (1) pour alimenter en signaux optiques, et
- un récepteur optique (3) qui est relié à au moins un point du guide de lumière (1) sur lequel les signaux de l'émetteur optique peuvent être reçus pour la réception de signaux optiques,
- le guide de lumière (1) comprenant au moins un milieu guidant la lumière dans un chemin optique entre l'émetteur et le récepteur, lequel présente au moins un effet optique, qui peut être influencé par des champs et/ou un rayonnement électromagnétiques externes, et par lequel les propriétés de transmission du milieu et également du guide de lumière peuvent être influencées en fonction des champs et/ou du rayonnement électromagnétiques externes, et
au niveau de l'unité stationnaire
- au moins une sonde (4)est prévue, laquelle permet une disposition mobile du guide de lumière (1), et est conçue pour amener au guide de lumière des champs et/ou un rayonnement électriques, magnétiques ou électromagnétiques correspondant aux informations à transmettre, de sorte que les propriétés de transmission du guide de lumière (1) se modifient en fonction des informations à transmettre.

3. Dispositif selon la revendication 1 ou 2,
**caractérisé en ce que**
le guide de lumière (1) comprend au moins un milieu guidant la lumière entre l'émetteur et le récepteur, lequel présente au moins un effet optique non linéaire, qui peut être influencé par des champs et/ou un rayonnement externes.

4. Dispositif selon la revendication 1, 2 ou 3,
**caractérisé en ce que**
le guide de lumière (1) comprend au moins un milieu guidant la lumière, qui peut être influencé dans ses propriétés optiques par des champs électriques et/ou magnétiques externes, et
qu'au moins une sonde (4) est prévue, laquelle est conçue pour amener au guide de lumière (1) des champs électriques et/ou magnétiques correspondant aux informations à transmettre.

5. Dispositif selon la revendication 1, 2 ou 3,
**caractérisé en ce que**
le guide de lumière (1) comprend au moins un milieu guidant la lumière, qui peut être influencé dans ses propriétés optiques par un rayonnement optique externe, et
qu'au moins une sonde (4) est prévue, laquelle est conçue pour amener au guide de lumière (1) un rayonnement optique correspondant aux informations à transmettre.

6. Dispositif selon l'une des revendications précédentes,
**caractérisé en ce que**
le guide de lumière (1) comprend au moins un milieu guidant la lumière qui peut être influencé dans ses propriétés optiques par différents types de champs et/ou de rayonnement électromagnétiques externes de différentes manières, et
qu'au moins une sonde (4) est prévue, laquelle est conçue pour amener au guide de lumière (1) plusieurs types différents de champs et/ou de rayonnement électromagnétiques correspondant aux informations à transmettre.

7. Dispositif selon la revendication 6,
**caractérisé en ce que**
le guide de lumière (1) comprend au moins un milieu guidant la lumière qui peut être influencé dans ses propriétés optiques par des champs électriques et magnétiques de différentes manières, et
qu'au moins une sonde (4) est prévue, laquelle est conçue pour amener au guide de lumière (1) des champs électriques et magnétiques correspondant aux informations à transmettre.

8. Dispositif selon la revendication 7,
**caractérisé en ce que**
le guide de lumière (1) comprend au moins un milieu guidant la lumière qui peut être influencé dans ses propriétés optiques par des champs électriques et un rayonnement optique de différentes manières, et
qu'au moins une sonde (4) est prévue, laquelle est conçue pour amener au guide de lumière (1) des champs électriques et un rayonnement optique correspondant aux informations à transmettre.

9. Dispositif selon l'une quelconque des revendications 6 à 8,
**caractérisé en ce que**
l'émetteur optique (2) est conçu pour émettre simultanément de la lumière avec plusieurs longueurs d'ondes prédéterminées et
que ces longueurs d'ondes sont ajustées aux différents types d'influence des champs électriques, magnétiques ou électromagnétiques externes et
que le récepteur optique (3) est conçu pour recevoir sélectivement les différentes longueurs d'ondes.

10. Dispositif selon l'une des revendications 6 à 8,
**caractérisé en ce que**
l'émetteur optique (2) est conçu pour émettre simultanément la lumière avec plusieurs longueurs d'ondes prédéterminées et
que ces longueurs d'ondes sont ajustées aux différents types d'influence des champs électromagnétiques externes et
que le récepteur optique (3) est conçu pour la réception de manière sommaire ou caractéristique des différentes longueurs d'ondes.

11. Dispositif selon l'une des revendications précédentes,
**caractérisé en ce que**
le guide de lumière (1) comprend des sections pour le guidage de la lumière (6) et des sections pour la modulation (7).

12. Dispositif selon l'une des revendications précédentes,
**caractérisé en ce que**
l'émetteur optique (2) comprend des moyens de réglage de l'amplitude de la puissance d'émission émise, de sorte que le niveau des signaux optiques à l'entrée du récepteur optique (3) et/ou le niveau des signaux électriques à la sortie du récepteur optique (3) présentent une valeur constante.

13. Dispositif selon l'une des revendications précédentes,
**caractérisé en ce que**
des moyens de réglage de l'amplitude sont affectés à la sonde (4), de sorte que le niveau des signaux optiques ou les taux de modulation à l'entrée du récepteur optique (3) et/ou le niveau des signaux électriques ou les taux de modulation à la sortie du récepteur optique (3) présentent une valeur constante.

14. Dispositif selon la revendication 12 ou 13,
**caractérisé en ce que**
un autre récepteur optique pour la réception des signaux optiques est prévu, lequel détermine exclusivement les niveaux de signaux et/ou les taux de modulation.

15. Dispositif selon l'une quelconque des revendications précédentes,
**caractérisé en ce que**
le guide de lumière (1) comprend au moins un premier segment (10) et un second segment (11), au moins un premier segment étant relié à l'émetteur optique (2), et au moins un second segment étant relié au récepteur optique (3), et en outre au moins un des guides de lumière présentant un milieu qui peut être influencé par la sonde (4), de sorte que la lumière d'un premier segment est surcouplée dans un second segment.

16. Dispositif selon l'une des revendications précédentes,
**caractérisé en ce que**
le récepteur optique (3) est conçu comme un récepteur différentiel, lequel présente des moyens appropriés pour diviser la lumière fournie par le guide de lumière (1) en une partie modulée et en une partie non modulée et pour évaluer la différence des deux parties.
